## Europäisches Patentamt
## European Patent Office
## Office européen des brevets

(19)

(11) Publication number: **0 171 117**
**B1**

(12) **EUROPEAN PATENT SPECIFICATION**

(45) Date of publication of the patent specification:
**28.10.87**

(51) Int. Cl.⁴: **A 01 K 1/00, F 24 F 11/053**

(21) Application number: **85201223.6**

(22) Date of filing: **23.07.85**

(54) **System for controlling the environment in a life-stock house.**

(30) Priority: **31.07.84 NL 8402389**

(43) Date of publication of application:
**12.02.86 Bulletin 86/7**

(45) Publication of the grant of the patent:
**28.10.87 Bulletin 87/44**

(84) Designated Contracting States:
**AT BE CH DE FR GB IT LI LU NL SE**

(56) References cited:
**EP - A - 0 067 979**
**US - A - 3 352 225**

(73) Proprietor: **Smulders, Adrianus Henrikus Josephus,
Sniederslaan 126, NL-5531 EN Bladel (NL)**

(72) Inventor: **Smulders, Adrianus Henrikus Josephus,
Sniederslaan 126, NL-5531 EN Bladel (NL)**

(74) Representative: **Timmermans, Anthonius C.Th., Ir. et al,
European Patent Attorneys Octrooibureau Zuid P.O.
Box 2287, NL-5600 CG Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to an environment control system for a room-like live-stock house and to a live-stock house provided with such an environment control system.

In the modern live-stock farming where large numbers of live-stock, for instance cows, pigs or poultry are present in a building it is of great importance that the environment in these buildings, which will be called live-stock houses, can be controlled accurately. One of the main factors is to keep the temperature at a certain constant value. This is in particular true for those live-stock houses such as commonly used for the breeding and fatting of pigs, where the proper live-stock house consists of a room. Such rooms can be built in greater or smaller numbers side by side and be placed under a roof. A type of building which is often used is that in which a number of rooms are placed side by side on one side of a corridor. If desired at the other side of this corridor also a number of adjacent rooms can be present.

Usually such live-stock houses for pigs have practically completely closed rooms. In these rooms a regular stream of air is created with a fan placed at one side of the room and with an air supply valve located in the wall opposite the fan, for instance on the side of the corridor. The temperature in these rooms is for the greater part determined by the heat release of the live-stock. As in rooms for pigs the contents of flesh per $m^3$ is larger than in live-stock houses for cows, it is especially for rooms for pigs more difficult to control the environment and to keep especially the temperature at the desired value. This is the reason for the use of the above described system with a fan and an air supply valve.

In practically all rooms for pigs the air supply valve is located in the upper part of the wall. Since the air discharge fan is located in the upper part of the room, but at a distance from the air supply valve, a stream of air is created which can keep the temperature at the desired value. To realize this it is however necessary that the stream of air can ce bontrolled because various factors can influence as a matter of fact the temperature in the room. So for instance the supplied air can be warmer or cooler dependent on the weather conditions and the production of the heat by the pigs can also vary dependent firstly on the number of pigs in a room and secondly on the condition in which the pigs are, especially the weight they have.

To realize this possibility for control the air supply valve is adjustable in such way that the transmission opening can be varied. Furthermore most systems have a possibility of controlling the momentary air capacity of the fan. This control can consist of an electric control of the number of revolutions of the fan which is usually located in a shaft, and/or by a valve, for instance in the form of a diaphragm with which the shaft can be closed to a greater or lesser extent. It is evident that a control of the position of the air supply valve and of the fan by hand, although possible, is a very labour consuming operation. For the adjustment namely first the temperature should be measured and on the hand thereof, the control should be carried out based on experimental data. To avoid this disadvantage automatically operating environment control systems have already been used; in these systems a temperature sensor is located in the room which can supply an electrical signal. This electrical signal is fed to a micro-processor which, dependent on the incoming control signal, determines the position of the valve and the number of revolutions of the fan.

Although such an automatic control has brought a considerable improvement with respect to systems with hand control, it has been found in practice that the temperature variations in the room are still fairly large and especially that the uniformity of the temperature leaves much to be desired. This is understandable because the air coming from the outside in the room has a turbulant movement which turbulations are dependent amongst others from the temperature, the humidity and the composition of the incoming air. Due to these facts there can be still undesirable temperature differences between those parts of the room located near to the wall with the valve and those parts which are located nearer to the fan.

The temperature in the centre of the room, which for instance has a surface between 40 and 100 $m^2$, can differ considerably from the temperature in the rest of the room. Especially when the incoming air is humid the centre of the room will obtain a lower temperature than the other parts.

The object of the invention is to control the environment in a live-stock house with rooms in such manner that the above mentioned disadvantages are for the greater part avoided and that advantages are obtained which will be later explained.

An environment control system for a room-like live-stock house, especially for pigs, according to the invention has a room which on one side has a wall with an adjustable air supply valve in the upper part thereof and an air discharge fan located at a certain distance from that wall which fan is placed in the upper part of the room and in which the momentary capacity of the fan and the momentary throughflow of the air supply valve can be controlled by a micro-processor dependent on the temperature in the room; the invention is characterized in that two temperature sensors are located in the room of which one is located closer to the wall with the air supply valve and the other closer to the fan, which temperature sensors each supply an electrical signal for the control of the micro-processor such that the average value of the two control signals determines the required position of the air supply valve and the required capacity of the fan to obtain the desired temperature, a possibly occuring variation of the difference of both the control signals correcting the position of the air supply valve in such manner that the variation of the difference between both control signals is neutralized.

Similarly as in the above summarized environmental control with one temperature sensor, the position of the air supply valve and the momentary capacity of the fan are, via the temperature sensors, made automatically dependent on the temperature in the room. As however two temperature sensors are used which are located at a certain distance from each other in the room and from which an average temperature in the room is deducted controlling the micro-processor, a considerably more exact control is obtained than with a device and a control system according to the prior art. If for some reason the temperature at the location of one temperature sensor rises and the temperature at the location of the other temperature sensor falls, which is mostly the case, the average value will still retain the required value. Even this situation is not ideal because even small differences, of some degrees C, between the location of one temperature sensor and the location of the other temperature sensor can have an adverse effect on the condition of the pigs, especially on the growth of the pigs. For this reason a difference-signal is derived in the micro-processor from the difference of the two signals of the temperature sensors which difference-signal counteracts a possibly developed variation of the difference between both the control signals, by altering the position of the air supply valve. A change of the position of the air supply valve namely causes a change of the turbulation of the air stream in the room in such manner that the difference between both the control signals is compensated. In the ideal situation both temperature sensors have the same temperature. If the temperature of one of the sensors decreases and the temperature of the other sensor shows a simultaneous equal increase the position of the air supply valve and the momentary capacity of the fan will remain the same. The difference in temperature could persist during a longer time because the average value of both the temperatures remains the same. By the extra correcting change of the position of the air supply valve the ideal situation, with equal temperatures of the sensors, can be restored, at least be approximated.

The temperature sensors can be of a type which is readily available on the market; they can for instance be bimetals or temperature sensitive semiconductors. The micro-processor also can be of a common on the market available type and be adapted to the purpose which is pursued by the invention. The air supply valve consists, as is also known from the prior art, preferably of a baffle which covers the entire whidth of the wall, hinches on the lower side and can practically link up with the roof of the room.

According to a special embodiment of the present invention there is a third temperature sensor between both temperature sensors. This third temperature sensor also gives a control signal to the micro-processor but this control signal has no influence on the position of the air supply valve just as long as the average value of the temperature of both the other sensors is not or only slightly deviating from a once chosen desired temperature. If for one reason or other, for example by the occurence of a big change in the air humidity or the influence of the wind, either at the air supply valve, or on the outside of the fan, the temperature of the third sensor falls or rises with respect to the other temperature sensors, a control signal will be generated which changes the position of the air supply valve in that sense that the change which has occured in the temperature of the third sensor is compensated as far as possible. In actual use it was found that the control as a consequence of the control signal of the third temperature sensor was necessary only a few times per hour. In the micro-processor the required provisions can be made.

According to another embodiment of the present invention the control signal from the third temperature sensor can, via the micro-processor, actuate a heating apparatus or a cooling apparatus for the air which is flowing to the air supply valve. This heating and/or cooling can if necessary be combined with the oscillation of the air supply valve caused by the third control signal.

The invention will now be set out in more detail with reference to a drawing showing schematically a room-like life-stock house with an environment control system according to the invention.

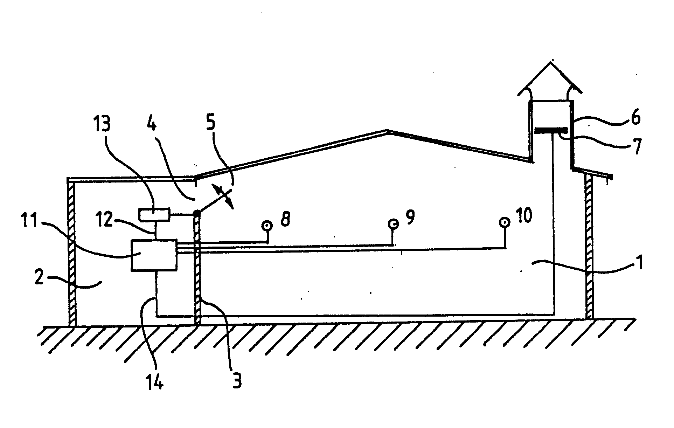

In the drawing 1 is the room which links up with the corridor 2. Between room 1 and the corridor 2 there is a wall 3 which has on the upper side over its entire width an opening 4 which can be closed by the air supply valve 5. With 6 an air shaft is indicated in which the fan 7 is located. Three temperature sensors are indicated with reference numerals 8, 9 and 10 located at the side as shown in the drawing in room 1. These temperature sensors send their control signals to a micro-processor 11 which is placed in the corridor 2. The micro-processor 11 is on the one side, via the wire 12, connected to the motor 13 which governs the valve 5 and on the other side, via the wire 14 to the fan 7.

Motor 13 can be of a type which is readily available on the market and for instance consist of a solenoide or a servo-motor.

The temperature sensor indicated with 9 is the third temperature sensor here above refered to and is located, as is shown in the drawing, at a side between the first and the second temperature sensors 8 and 10 respectively.

As has already been indicated above, a room-like live-stock house of the same type as indicated with 1 can be present at the left side of the corridor 2; also several room-like live-stock houses as indicated with 1 can be located under the same roof. They are then located in a direction perpendicular to the plain of drawing. The various room-like live-stock houses are in this case completely separated and have each their own environment control system. However they can be served by a single micro-processor if this processor is provided with the necessary means.

## Claims

1. Environment control system for a room-like live-stock house, especially for pigs, which room has on one side a wall with an adjustable air supply valve in the upper part thereof and in a wall located at some distance from said wall an air discharge fan in the upper part of the room, the momentary capacity of the fan and the momentary throughflow of the air supply valve being controlled by a micro-processor in dependence of the temperature in the room, characterized in that two temperature sensors are located in the room of which one is closer to the wall with the air supply valve and the other is closer to the fan

which temperature sensors each generate an electrical signal for controlling the micro-processor in such manner that the average value of both the two control signals determines the required position of the air supply valve and the required capacity of the fan to obtain the desired temperature, whereby a possibly occuring variations of the difference of both the control signals corrects the position of the air supply valve in such manner that the variation of the difference of both control signals which has occured is compensated.

2. Environment control system according to claim 1, characterized in that a third temperature sensor is located between the two temperature sensors and generates an electrical signal which is supplied to the micro-processor when the temperature at the site of the third sensor varies, which signal controls the micro-processor in such manner that the position of the air supply valve is corrected in such a way that the variation of the temperature at the site of the third sensor is compensated.

3. Environment control system according to claim 2, characterized in that the position of the air supply valve in consequence of the control signal of the third temperature sensor is varied only a few times per hour.

4. Environment control system according to claim 1, characterized in that a third temperature sensor is located between the two temperature sensors and generates an electrical signal which is supplied to the micro-processor when the temperature at the site of the third sensor varies as a consequence of which the micro-processor starts a heating or cooling system for the air entering the air supply valve.

5. Live-stock house provided with an environment control system according to claim 1, 2, 3 or 4.

6. Live-stock house according to claim 5 with several separate rooms located side by side, each room being provided with a environment control system according to claim 1, 2, 3 or 4.

**Patentansprüche**

1. Klimaregelungssystem für einen zimmerförmigen Tierstall, insbesondere für Schweine, welches Zimmer an einer Seite eine Wand hat, in deren oberem Teil sich eine einstellbare Luftzufuhrklappe befindet, und einen in einiger Entfernung von dieser Wand gelegenen Luftabfuhrventilator, im oberen Teil dieses Zimmers angebracht, wobei die momentane Leistung des Ventilators und der momentane Durchlass der Luftzufuhrklappe durch einen Mikro-Prozessor in Abhängigkeit von der Temperatur im Zimmer geregelt werden, dadurch gekennzeichnet, dass sich im Zimmer zwei Temperaturgeber befinden, von denen einer sich näher zur Wand mit der Luftzufuhrklappe und der andere sich näher zum Ventilator befindet, welche Temperaturgeber jeweils ein elektrisches Signal zur Steuerung des Mikro-Prozessors abgeben, und zwar in der Weise, dass der mittlere Wert der beiden Steuersignale den erforderlichen Stand der Luftzufuhrklappe und die erforderliche Leistung des Ventilators bestimmt, um die erwünschte Temperatur zu erreichen, und eine sich etwa einstellende Änderung der Differenz der beiden Steuersignale den Stand der Luftzufuhrklappe korrigiert, in der Weise, dass die eingetragene Änderung dre Differenz beider Steuersignale aufgehoben wird.

2. Klimaregelungssystem nach Anspruch 1, dadurch gekennzeichnet, dass sich zwischen den beiden Temperaturgebern ein dritter Temperaturgeber befindet, der bei Änderung der Temperatur an der Stelle dieses Temperaturgebers ein elektrisches Signal an den Mikro-Prozessor abgibt, das den Mikro-Prozessor in der Weise steuert, dass die Stellung der Luftzufuhrklappe in der Weise korrigiert wird, dass die eingetretene Änderung in der Temperatur an der stelle des dritten Temperaturgebers ausgeglichen wird.

3. Klimaregelungssystem nach Anspruch 2, dadurch gekennzeichnet, dass der Stand der Luftzufuhrklappe infolge des Steuersignals des dritten Temperaturgebers nur einige Male pro Stunde geändert wird.

4. Klimaregelungssystem nach Anspruch 1, dadurch gekennzeichnet, dass sich zwischen den beiden Temperaturgebern ein dritter Temperaturgeber befindet, der bei Änderung der Temperatur an der Stelle dieses Temperaturgebers ein elektrisches Signal an den Mikro-Prozessor abgibt, infolgedessen der Mikro-Prozessor eine Heizungs- bzw. Kühlanlage für die durch die Luftzufuhrklappe eintretende Luft einschaltet.

5. Tierstall, der mit einem Klimaregelungssystem nach Anspruch 1, 2, 3 oder 4 versehen ist.

6. Tierstall nach Anspruch 5 mit mehreren nebeneinander gelegenen, voneinander getrennten Zimmern, jedes mit einem Klimaregelungssystem nach Anspruch 1, 2, 3 oder 4 versehen.

**Revendications**

1. Système de conditionnement d'air pour une étable à bétail en forme de chambre, en particulier une porcherie, équipée d'un clapet d'amission d'air situé dans la partie supérieure d'une de ses parois latérales, et d'un ventilateur pour évacuer l'air situé dans la partie supérieure de la chambre, la capacité momentanée du ventilateur et le passage momentané du clapet d'amission d'air étant réglés par un micro-processeur en fonction de la température dans cette chambre, avec la caractéristique que deux détecteurs thermométriques sont placés dans la chambre, l'un plus rapproché de la paroi avec le clapet d'amission d'air, l'autre plus rapproché du ventilateur, lesquels détecteurs thermométriques délivrent chacun un signal électrique pour la commande du micro-processeur de telle sorte que la valeur moyenne des deux signaux détermine la position requise du clapet d'admission d'air et celle du ventilateur pour obtenir la température désirée, et qu'une éventuelle variation intervenant dans la différence entre les deux signaux de commande corrige la position du clapet d'amission d'air de telle sorte que cette variation soit supprimée.

2. Système de conditionnement d'air selon la revendication 1, avec la caractéristique qu'entre les deux détecteurs thermométriques il y en a un troisième qui, lors d'un changement de la température à cet endroit, envoie au micro-processeur un signal électrique qui commande ce micro-processeur de telle sorte que la position du clapet d'admission d'air soit corrigée en ce sens que la variation de la température à l'emplacement du troisième détecteur soit compensée.

3. Système de conditionnement d'air selon la revendication 2, avec la caractéristique que la position du clapet d'amission d'air consécutive au signal de commande du troisième détecteur thermométrique n'est modifiée que quelques fois par heure.

4. Système de conditionnement d'air selon la revendication 1 avec la caractéristique que, entre les deux détecteurs thermométriques, il y en a un troisième qui, lors d'un changement de la température à cet endroit, délivre un signal électrique au micro-processeur à la suite de quoi ce micro-processeur met en marche soit une installation de chauffage soit une installation de refroidissement.

5. Etable à bétail équipée d'un système de conditionnement d'air selon la revendication 1, 2, 3 ou 4.

6. Etable à bétail selon la revendication 5 avec plusieurs chambres séparées les unes des autres et situées les unes à côté des autres, chacune équipée d'un système de conditionnement d'air selon la revendication 1, 2, 3 ou 4.